# EUROPÄISCHE PATENTSCHRIFT

(11) **EP 1 077 281 B1**
(45) Veröffentlichungstag und Bekanntmachung des Hinweises auf die Patenterteilung: **04.08.2004**
(21) Anmeldenummer: 00109860.7
(22) Anmeldetag: 10.05.2000
(51) Int. Cl.: D21B 1/32, D21B 1/12

(54) **Verfahren zur Aufbereitung eines holzstoffhaltigen Papierfaser-Rohstoffes**
Process for treating wood pulp
Procédé pour le traitement des pâtes de bois

(30) Priorität: 17.08.1999 DE 19938976
(43) Veröffentlichungstag der Anmeldung: 21.02.2001
(73) Patentinhaber: Voith Paper Patent GmbH, 89522 Heidenheim (DE)
(72) Erfinder: Niederer, Stefan, 88361 Altshausen (DE); Selder, Harald, 88281 Schlier (DE)

(56) Entgegenhaltungen:
- EP-A- 0 653 510
- DE-A- 2 413 159
- DE-A- 2 413 278
- DE-B- 2 813 448
- US-A- 5 316 621

## Beschreibung

Die Erfindung bezieht sich auf Verfahren zur Aufbereitung von holzstoffhaltigem Papierfaser-Rohstoff gemäß dem Oberbegriff des Anspruchs 1.

Verfahren dieser Art werden benutzt, um die Papierfaser-Rohstoffe so weit aufzubereiten, dass sie auch zur Herstellung von besonders dünnen Papieren verwendet werden können. Dabei sind unter solchen Papieren insbesondere sogenannte SC- und LWC-Papiere zu verstehen. In der Regel werden diese Sorten als grafische Papiere eingesetzt, bei denen bekanntlich die Qualitätsanforderungen besonders hoch sind. Da solche Papiere relativ dünn sind, oft nur ein Zehntel Millimeter dick nach dem Satinieren, ist es wichtig, dass die Rohstoffe nur solche Fasern enthalten, die bei diesen dünnen Blattformen nicht störend hervortreten oder das Papier ungleichmäßig erscheinen lassen. Es ist auch zu vermeiden, dass weiche Zellstofffasern durch harte Fasern oder harte Faserbruchstücke beim Satinieren so sehr zusammengedrückt werden, dass die Opazität verloren geht ("Schwarzsatinage").

Da aber bekanntlich die Bestrebung besteht, auch bei hochwertigen Papiersorten holzstoffhaltige Rohstoffe einzusetzen, ist dieses Problem nicht immer leicht zu lösen. Holzstoffhaltige Rohstoffe können Altpapier, frischer Holzstoff oder eine Mischung aus beiden sein. Holzstofffasern werden gewonnen, indem das Holz entweder mechanisch (MP) oder thermisch- mechanisch (TMP) oder mechanisch unter Zuhilfenahme von Chemikalien (CTMP) bearbeitet wird, Im Gegensatz dazu sind chemisch aufgeschlossene Zellstoffe (CP) zu sehen, die sich bekanntlich durch eine hohe Flexibilität der Fasern auszeichnen.

Um bei Einsatz von holzstoffhaltigem Rohstoff eine gute Oberflächenqualität zu erzielen, ist es daher meist erforderlich, durch klassische Mahlverfahren den Faserstoff so weit zu zerkleinern, dass ein sauberes dünnes Blatt daraus gebildet werden kann. Hierbei geht oft ein großer Teil des Festigkeitspotentials der Fasern verloren.

Aus der US 5,316,621 ist ein Verfahren zur Herstellung von hochwertigem Papierstoff aus Altpapier bekannt, welches eine Kombination von Hochkonsistenzkneten und nachfolgender Feinsortierung enthält. Insbesondere soll das Verfahren verwendet werden, um Altpapiersorten aufzubereiten, die mit zu entfernenden druckempfindlichen Schlichten (plastic) versehen sind. Die im Knetprozess aufgebrachten Scherkräfte lösen diese Beschichtungen ab, so dass sie in den anschließenden Reinigungsstufen entfernt werden können. Als besonders geeignet werden eine Feinsortierung (Schlitze < 0,2 mm) anschließend Flotation und anschließend eine Reinigung im Hydrozyklon angegeben. In der DE 24 13 278 A wird ebenfalls eine Kombination von Dispergierung und anschließender Reinigung vorgeschlagen. Dabei sollen die Störstoffe beim Dispergieren so kompaktiert werden, dass sie sich im anschließenden Hydrozyklon leichter abscheiden lassen. Insbesondere gilt das für Kunststofffolien. Auch die EP 0 653 510 A2 und DE 24 13 159 A befassen sich mit Verfahren, bei denen durch Kneten oder Dispergieren der Faserstoff zunächst aufgeschlossen und anschließend von Störstoffen gereinigt wird.

Der Erfindung liegt die Aufgabe zu Grunde, ein Verfahren zur Aufbereitung von holzstoffhaltigen Rohstoffen, insbesondere Altpapier, zu schaffen, mit dem unter weitestgehender Schonung der Fasern ein Papierfaserstoff erzeugt werden kann, der den bereits erwähnten Anforderungen genügt.

Diese Aufgabe wird durch die im Kennzeichen des Anspruchs 1 genannten Merkmale gelöst.

Durch die Kombination der beschriebenen Verfahrensschritte ist ein weitgehender Erhalt der Faserlänge möglich, da gezielt solche Holzstofffasern herausfraktioniert werden, deren Dicke und/oder Steifigkeit für den angegebenen Zweck noch ungeeignet sind; außerdem wird ein spezifisch wirkendes Hochkonsistenzmahlverfahren durchgeführt.
Dazu ist es möglich, in Hochkonsistenzrefinern zu mahlen oder für die Hochkonsistenzmahlung eine Dispergiermaschine mit ineinander axial eingreifenden Zahnreihen zu verwenden. Bei der Hochkonsistenz-Faserbeanspruchung überwiegt die Faser-Faser-Reibung. Aus diesem Grunde ist die Mahlung besonders Faserlängen-schonend, d.h. die Mahlwirkung entfaltet sich nicht in einer Kürzung der Faser, sondern in einer Fibrillierung und Verminderung der Faserdicke.

Die Schlitzfraktionierung lässt sich bei ca. 3 bis 4 % Stoffdichte (Feststoffgehalt) durchführen (eventuell auch 1 bis 1,5 %). Für die Hydrozyklon-Fraktionierung liegt der günstigste Bereich bei ca. 1 % Stoffdichte.

Bei der Anwendung des Verfahrens zur Aufbereitung von zumindest teilweise bedrucktem Altpapier kann das Verfahren mit Vorteil auch die Entfernung von Druckfarben oder sonstigen im Altpapier enthaltenen hydrophoben Verunreinigungen umfassen. Damit ist gemeint, dass durch die Hochkonsistenzmahlung ohne zusätzlichen Aufwand auch eine Dispergierung erfolgt, welche zur Abtrennung der an den Fasern haftenden Störstoffe besonders geeignet ist, die sich dann leicht entfernen lassen. Aus diesen Gründen ist eine Kombination mit solchen Verfahrensschritten, die dem Deinken dienen, besonders sinnvoll.

Die Erfindung und ihre Vorteile werden erläutert an Hand von Zeichnungen. Dabei zeigen:
- Fig. 1 und 2: jeweils ein exemplarisches Verfahrensschema zur Durchführung des erfindungsgemäßen Verfahrens;
- Fig. 3: Häufigkeitsverteilungen der Faserdicke bei verschiedenen Verfahrensschritten;
- Fig. 4 und 5: schematisch: Zwei verschiedene für das Verfahren geeignete Anlagen.

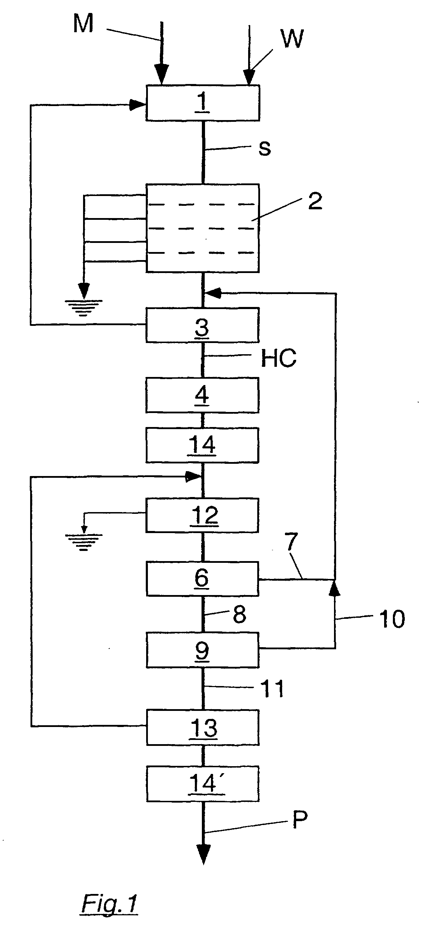

Das in der Fig. 1 gezeigte Verfahrensschema stellt die wesentlichen Verfahrensschritte der Erfindung an Hand eines Beispiels dar. Zunächst erfolgt die Stofflösung 1, bei der der holzstoffhaltige Papierfaser-Rohstoff M zusammen mit Wasser W so behandelt wird, dass sich eine wässrige Faserstoffsuspension S bildet. Im häufigsten Anwendungsfall der Erfindung, nämlich beim Eintrag von Altpapier als Papierfaser-Rohstoff M, ist anschließend eine mehr oder weniger aufwendige Reinigung 2 der Faserstoffsuspension S notwendig. Welcher Aufwand zur Herstellung eines sauberen Papierstoffes erforderlich ist, ist an sich bekannt. In Fällen, in denen ein von vorneherein sauberer Rohstoff eingesetzt wird, kann die Reinigung auch entfallen. In der sich anschließenden Eindickung 3 wird ein großer Teil des Wassers entfernt, so dass sich ein Hochkonsistenzstoff HC bildet. Dieser wird erfindungsgemäß einer Hochkonsistenzmahlung 4 unterzogen, bei der Dicke und/oder Steifigkeit der Holzstofffasern reduziert werden. An dieser Stelle kann der Hochkonsistenzstoff HC gebleicht (Bleiche 14) werden, was wegen der hohen Stoffdichte leicht möglich ist.

Der gemahlene Hochkonsistenzstoff wird verdünnt und gelangt bei dem hier gezeigten Beispiel in eine Flotation 12, die dazu dient, feine hydrophobe Partikel aus der Suspension zu entfernen. Solche Partikel sind insbesondere Druckfarben und kleine klebende Störstoffe (stickies). Selbstverständlich ist dieser Trennschritt nur erforderlich, wenn solche Bestandteile noch enthalten sind. Es folgt nun eine Schlitzfraktionierung 6. Diese arbeitet z.B. mit sehr kleinen Schlitzweiten, vorzugsweise ca. 0,1 bis 0,2 mm. Solche Schlitze lassen nur weiche und dünne Fasern passieren (auch wenn diese relativ lang sind), was zur Folge hat, dass die noch nicht genügend für das Verfahrensziel behandelten Fasern im Überlauf 7 aufkonzentriert werden. Sie werden dann an eine Stelle des Verfahrens zurückgeführt, an der sie noch einmal in die Hochkonsistenzmahlung 4 gelangen müssen.

Der Durchlauf 8 der Schlitzfraktionierung 6 wird in eine Hydrozyklon-Fraktionierung 9 geführt, bei der mit Hilfe von starken Zentrifugalfeldern und Randeffekten an der Innenwandung des Hydrozyklons weitere Fasern, vor allem aber Faserbruchstücke, in den Überlauf 10 gelangen. Das sind gerade die Teile, die im wesentlichen aus dem Holzstoff stammen und immer noch zu steif und/oder zu dick sind. Oft sind sie auch weniger stark gequollen und daher spezifisch deutlich schwerer als die Suspension. Dieser Überlauf 10 wird in den Aufbereitungsprozess vor die Hochkonsistenzmahlung 4 zurückgeführt.

Grundsätzlich ist die Fraktionierung der zu dicken und/oder zu steifen Fasern auch in der umgekehrten Reihenfolge möglich, um das Verfahren im Sinne der Erfindung durchzuführen. In der Regel ist es aber besser, zuerst durch Schlitzfraktionieren solche Fasern auszuscheiden, die für den Verwendungszweck des erzeugten Faserstoffs deutlich zu dick sind. Anschließend können dann im Cleaner die restlichen Übergrößen herausfraktioniert werden. Hierzu ist der Cleaner besonders geeignet.

Der Gutstoff 11 der Hydrozyklon-Fraktionierung 9 wird bei diesem Beispiel in einer Eindickung 13 in seiner Konsistenz noch einmal angehoben und dann anschließend gereinigt und/oder gebleicht (Bleiche 14'). Am Ende fällt ein Papierfaser-Rohstoff P an, welcher die Anforderungen erfüllt.

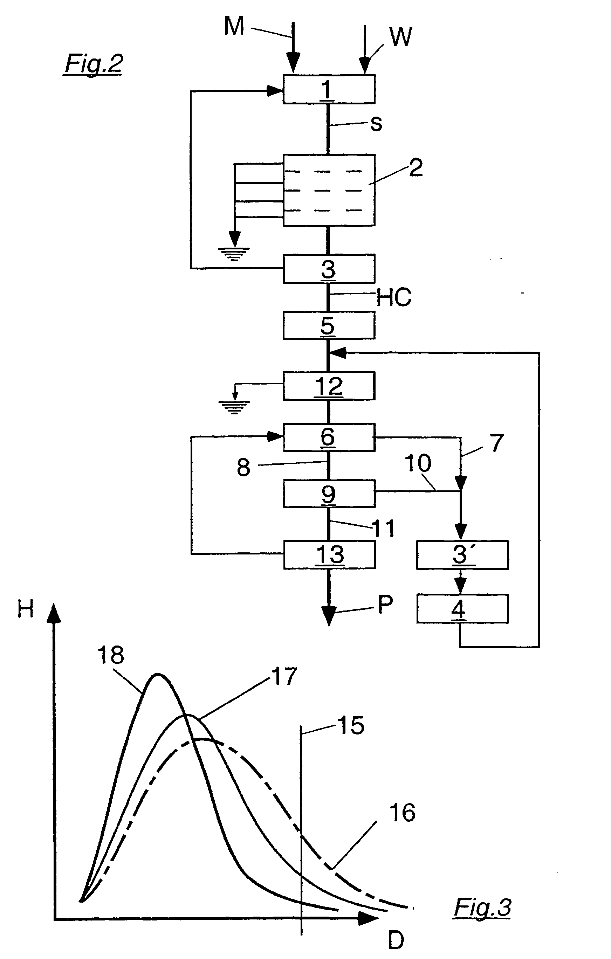

Das in der Fig. 2 dargestellte Verfahrensschema unterscheidet sich von dem der Fig. 1 im wesentlichen dadurch, dass der in der Eindickung 3 gebildete Hochkonsistenzstoff HC zunächst in einer Dispergierung 5 behandelt und dann nach Verdünnung in der Schlitzfraktionierung 6 aufgeteilt wird. Dabei ist die Dispergierung 5 von weitaus schwächerer Wirkung als die bereits beschriebene Hochkonsistenzmahlung. Sie dient eher der Auflösung von Reststippen und der Ablösung von Störstoffen. Nach Verdünnung liegt dann eine Suspension vor, in der die Papierfasern vollständig vereinzelt und relativ gut von anhaftenden Störstoffen abgelöst sind. In der sich anschließenden Schlitzfraktionierung kann dann, wie bereits beschrieben, der Teil der Papierfasem abgetrennt werden, also in den Überlauf 7 gelangen, für den die Hochkonsistenzmahlung 4 erforderlich ist, um das Verfahrensziel zu erreichen. Es versteht sich, dass normalerweise vor der Hochkonsistenzmahlung eine weitere Eindickung 3' vorgenommen werden muss. Diese Verfahrensvariante bedeutet zwar einen gewissen erhöhten Aufwand, die energieaufwendige Faserbehandlung ist aber noch spezifischer auf den jeweiligen Faserzustand abstimmbar.

Das Diagramm in der Fig. 3 kann das Verfahren noch weiter erläutern. In diesem Diagramm ist die Häufigkeit H über der Faserdicke D aufgetragen. Dabei ist die Faserdicke D mit 100 % normiert auf die Dicke des später hergestellten Papierblattes, wobei diese Dicke als Linie 15 in das Diagramm eingetragen ist.
Die Häufigkeitskurven zeigen exemplarisch:
- Als Kurve 16 eine Verteilung, wie sie beim unbehandelten Faserstoff, also z.B. in der Suspension S, gemessen werden kann,
- als Kurve 17 die Häufigkeitsverteilung nach der Schlitzfraktionierung und
- als Kurve 18 die Häufigkeitsverteilung im Gutstoff der Hydrozyklon-Fraktionierung.

Die drei Kurven 16, 17 und 18 bestätigen also, dass und in welcher Weise sich bei Anwendung des erfindungsgemäßen Verfahrens die Reduzierung der Faserdicke messtechnisch signifikant äußert.

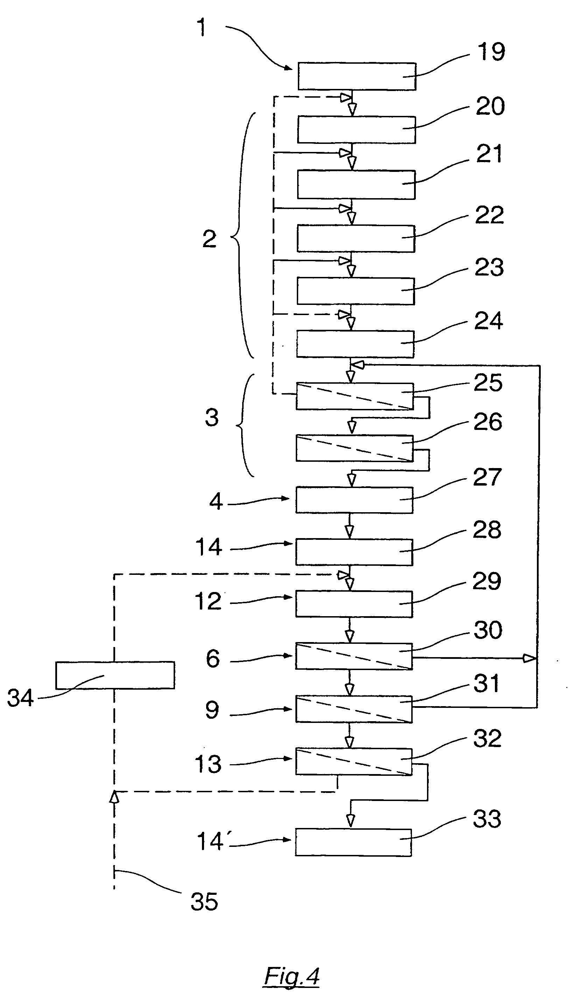

Die Fig. 4 zeigt ein wichtiges Anlagenbeispiel. Die dazu verwendeten einzelnen Apparate sind dabei nur namentlich erwähnt, da sie in ihrer technisch apparativen Ausführung bekannt sind. Die Anlage gemäß dieser Figur wendet das Verfahren an, welches als Verfahrensschema in der Fig. 1 bereits beschrieben ist. Die dort verwendeten Bezugszeichen für die verfahrenstechnischen Merkmale sind auch hier eingetragen. Da es sich bei dem in dieser Anlage bearbeiteten Rohstoff um ein bedrucktes Altpapier handelt, ist die Reinigung 2, die der im Stofflöser 19 durchgeführten Auflösung 1 folgt, relativ umfangreich. Sie enthält nämlich eine Dickstoffreinigung 20, eine Grobsortierung 21, eine erste Flotation 22, eine Schwerteilreinigung 23 sowie eine sich anschließende Feinsortierung 24. Dabei dient die erste Flotation 22 zur Entfernung bereits aufgelöster Druckfarbenpartikel. Die Eindickung 3 ist zweistufig, sie enthält ein erstes Scheibenfilter 25 sowie einen Hochkonsistenz-Eindicker 26. Man sieht, dass die folgende Hochkonsistenzmahlung 4 in einem Hoch-Energie-Disperger 27 durchgeführt wird. Damit ist gemeint, dass eine Dispergiermaschine mit einer besonders hohen Energiedichte betrieben wird, so dass sie eine höhere spezifische Arbeit überträgt als es bei der Dispergierung erforderlich ist. Der hochkonsistente Faserstoff wird in einem Hochkonsistenzbleichturm 28 gebleicht und nach Verdünnung mit durch Mikroflotation 34 geklärtem Rückwasser und Ergänzungswasser 35 in der zweiten Flotation 29 von den inzwischen abgelösten Störstoffen gereinigt. Die Wirkung der nachfolgenden Stufen: Schlitzfraktionierung 6 und Hydrozyklonfraktionierung 9 durch Schlitzfraktionator 30 und Fraktionier-Cleaner 31 wurde bereits beschrieben. Nach erneuter Eindickung 13 im zweiten Scheibenfilter 32 erfolgt noch eine Bleiche 14' in der reduktiven Bleichstufe 33.

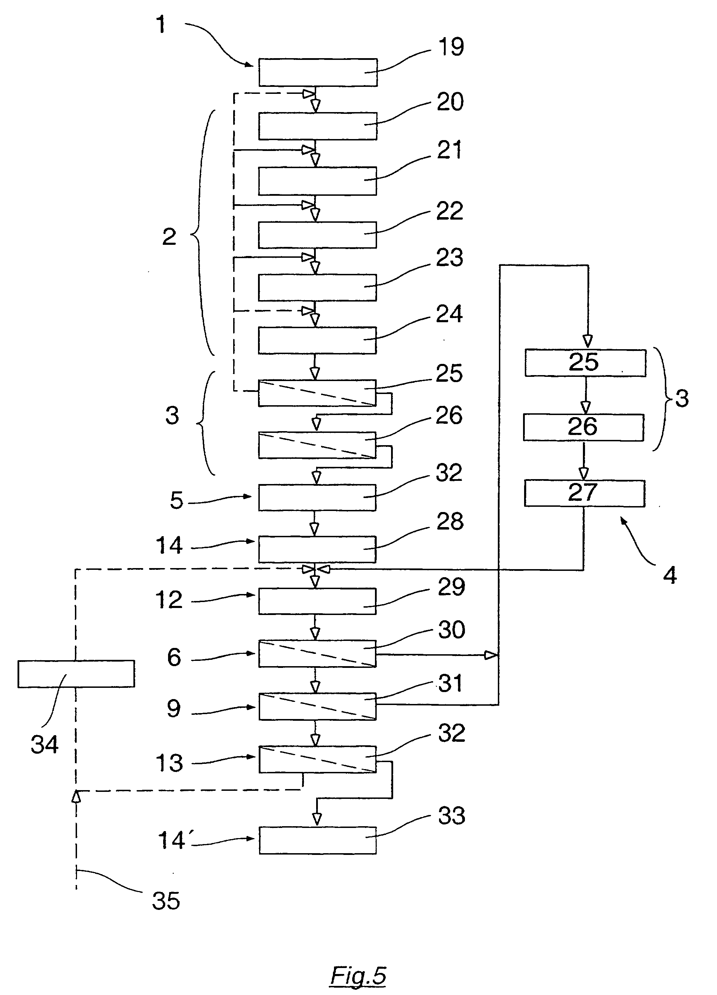

Fig. 5 zeigt die Verfahrensvariante der Fig. 2 als Anlagenschema. Daher wird die Hochkonsistenzmahlung 4 z.B. wiederum im Hochenergie-Disperger27 mit dem erst durch die beiden Fraktionierstufen 6 und 9 erhaltenen Faserstoff nach entsprechender Eindickung 3 durchgeführt.

## Patentansprüche

1. Verfahren zur Aufbereitung eines holzstoffhaltigen Papierfaser-Rohstoffes (M), insbesondere Altpapier, zu einem zur Erzeugung dünner Papiere besonders geeigneten Papierfaserstoff (P) mit folgenden Schritten:
a) Herstellung einer wässrigen Faserstoffsuspension (S);
b) Reinigung (2) der Faserstoffsuspension (S), sofern sie störende Verunreinigungen enthält;
c) Einstellung eines Feststoffgehaltes von mindestens 15 %, wodurch ein Hochkonsistenzstoff (HC) entsteht,
**dadurch gekennzeichnet,**
**dass**
d) zumindest eine Teilmenge des Hochkonsistenzstoffs (HC) in einer Hochkonsistenzmahlung (4) so bearbeitet wird, dass Dicke und/oder Steifigkeit der Holzstofffasern unter weitgehender Erhaltung ihrer Länge reduziert werden,
e) der hochkonsistent gemahlene Stoff verdünnt und in einer Schlitzfraktionierung (6) behandelt wird, deren Überlauf (7) erneut in die Hochkonsistenzmahlung (4) gelangt und deren Durchlauf (8)
f) einer Hydrozyklon-Fraktionierung (9) zugeführt wird, deren Überlauf (10) ebenfalls in die Hochkonsistenzmahlung (4) gelangt, und deren Gutstoff (11) den Papierfaserstoff (P) liefert.

2. Verfahren nach Anspruch 1,
**dadurch gekennzeichnet,**
**dass** der Hochkonsistenzstoff (HC) dispergiert wird und dass der dispergierte Stoff verdünnt und in einer Schlitzfraktionierung (6) behandelt wird, deren Überlauf (7), in der Hochkonsistenzmahlung (4) bearbeitet und danach wiederum in die Schlitzfraktionierung (6) geführt wird.

3. Verfahren nach Anspruch 1 oder 2,
**dadurch gekennzeichnet,**
**dass** bei der Hochkonsistenzmahlung (4) eine spezifische Arbeit von mindestens 200 - vorzugsweise 300 bis 400 - KWh/to übertragen wird.

4. Verfahren nach Anspruch 1, 2 oder 3,
**dadurch gekennzeichnet,**
**dass** die Hochkonsistenzmahlung (4) in einer Dispergiermaschine durchgeführt wird, bei der der Abstand der relativ zueinander bewegten Bearbeitungswerkzeuge mindestens 0,5 mm beträgt.

5. Verfahren nach einem der voranstehenden Ansprüche,
**dadurch gekennzeichnet,**
**dass** die spezifische Arbeit der Hochkonsistenzmahlung (4) so eingestellt wird, dass im Gutstoff (11) der Hydrozyklon-Fraktionierung (9) der Faseranteil mit einer Faserdicke, die über der des aus dem Papierfaserstoff (P) herzustellenden Papierdicke liegt, kleiner ist als 5 %.

## Claims

1. A method for treating a wood pulp-containing paper fibre raw material (M), in particular waste paper, to produce a paper pulp (P) particularly suitable for the production of thin papers, comprising the following steps:
a) production of an aqueous pulp suspension (S);
b) cleaning (2) of the pulp suspension (S) if it contains disrupting impurities;
c) setting a solids content of at least 15%, which produces a high-consistency material (HC),
**characterised in that**
d) at least a portion of the high-consistency material (HC) is processed in a high-consistency grinding stage (4) such that the thickness and/or stiffness of the wood pulp fibres is reduced while largely retaining their length,
e) the high-consistency ground stock is diluted and treated in a slit fractionation stage (6), the overflow (7) of which passes back into the high-consistency grinding stage (4) and the passed fraction (8) of which
f) is fed to a hydrocyclone fractionation stage (9), the overflow (10) of which likewise passes into the high-consistency grinding stage (4), and the accepted stock (11) of which supplies the paper pulp (P).

2. A method according to Claim 1, **characterised in that** the high-consistency material (HC) is dispersed and that the dispersed material is diluted and treated in a slit fractionation stage (6), the overflow (7) of which is processed in the high-consistency grinding stage (4) and then is returned into the slit fractionation stage (6).

3. A method according to Claim 1 or 2, **characterised in that** a specific work of at least 200 - preferably 300 to 400 - kWh/to is transmitted in the high-consistency grinding stage (4).

4. A method according to Claim 1, 2 or 3, **characterised in that** the high-consistency grinding (4) is carried out in a dispersing machine in which the distance of the processing implements which move relative to one another is at least 0.5 mm.

5. A method according to one of the preceding claims, **characterised in that** the specific work of the high-consistency grinding stage (4) is set such that in the accepted stock (11) of the hydrocyclone fractionation stage (9) the proportion of fibres having a fibre thickness which is above that of the paper thickness to be produced from the paper pulp (P) is less than 5%.

## Revendications

1. Procédé destiné au traitement d'un produit de départ en fibres de papier (M) contenant de la pâte de bois, notamment des vieux papiers de récupération, pour l'obtention d'une matière fibreuse à papier (P), particulièrement appropriée à la production de papiers minces, le procédé comprenant les étapes suivantes :
a) fabrication d'une suspension aqueuse de matière fibreuse (S) ;
b) épuration (2) de la suspension de matière fibreuse (S), dans la mesure où elle contient des impuretés gênantes ;
c) réglage d'une teneur en matière solide d'au moins 15 %, pour ainsi obtenir une matière à haute consistance (HC),
**caractérisé en ce que**
d) au moins une partie de la matière à haute consistance (HC) est travaillée dans une opération de raffinage haute consistance (4) de telle sorte que l'épaisseur et/ou la rigidité des fibres de la pâte de bois est ou sont réduite(s) tout en conservant, dans une large mesure, leur longueur,
e) la matière raffinée à haute consistance est délayée et est traitée dans une opération de fractionnement en long (6), dont le refus (7) est soumis de nouveau à l'opération de raffinage haute consistance (4), et dont la matière passée (8)
f) est soumise à une opération de fractionnement par hydrocyclone (9) , dont le refus (10) est également renvoyé à l'opération de raffinage haute consistance (4), et dont la matière acceptée (11) constitue la pâte fibreuse à papier (P).

2. Procédé selon la revendication 1,
**caractérisé en ce que** la matière à haute consistance (HC) est dispersée et **en ce que** la matière dispersée est délayée et est traitée dans une opération de fractionnement en long (6), dont le refus (7) est retraité dans l'opération de raffinage haute consistance (4), et est ensuite soumis de nouveau à l'opération de fractionnement en long (6).

3. Procédé selon la revendication 1 ou 2,
**caractérisé en ce que**, lors de l'opération de raffinage haute consistance (4), il est transmis un travail spécifique d'au moins 200 KWh/tonne et, de préférence. compris entre 300 et 400 KWh/tonne.

4. Procédé selon la revendication 1, 2 ou 3,
**caractérisé en ce que** l'opération de raffinage haute consistance (4) est effectuée dans une machine à disperser, la distance entre les outils de traitement, déplacés les uns par rapport aux autres, étant d'au moins 0,5 mm.

5. Procédé selon l'une des revendications précédentes,
**caractérisé en ce que** le travail spécifique de l'opération de raffinage haute consistance (4) est réglé de telle sorte que, dans la matière acceptée (11) dans l'opération de fractionnement par hydrocyclone (9), le pourcentage de fibres ayant une épaisseur de fibre qui est supérieure à l'épaisseur du papier à fabriquer à partir de la pâte fibreuse à papier (P), soit inférieur à 5 %.
